# EUROPÄISCHE PATENTSCHRIFT

(11) **EP 1 886 003 B1**
(45) Veröffentlichungstag und Bekanntmachung des Hinweises auf die Patenterteilung: **09.03.2011**
(21) Anmeldenummer: 06723584.6
(22) Anmeldetag: 21.03.2006

(54) **NOCKENWELLE SOWIE VERFAHREN ZUR HERSTELLUNG EINER NOCKENWELLE**
CAMSHAFT AND METHOD FOR THE PRODUCTION THEREOF
ARBRE A CAMES ET PROCEDE DE PRODUCTION ASSOCIE

(30) Priorität: 30.03.2005 DE 102005014449
(43) Veröffentlichungstag der Anmeldung: 13.02.2008
(73) Patentinhaber: Fraunhofer-Gesellschaft zur Förderung der angewandten Forschung e.V., 80686 München (DE); VW Sachsen GmbH, 09120 Chemnitz (DE)
(72) Erfinder: NEUGEBAUER, Reimund, 01156 Dresden (DE); HENNICKE, Helmut, 38302 Wolfenbüttel (DE)
(74) Vertreter: Grünecker, Kinkeldey, Stockmair & Schwanhäusser Anwaltssozietät
(86) Internationale Anmeldenummer: PCT/EP2006/002573
(87) Internationale Veröffentlichungsnummer: WO 2006/103012

(56) Entgegenhaltungen:
- EP-A- 0 265 663
- DE-A- 2 914 095
- DE-A- 4 427 201
- DE-U- 29 721 260
- PATENT ABSTRACTS OF JAPAN Bd. 007, Nr. 199 (M-240), 3. September 1983 (1983-09-03) & JP 58 098608 A (SUZUKI JIDOSHA KOGYO KK), 11. Juni 1983 (1983-06-11)
- PATENT ABSTRACTS OF JAPAN Bd. 007, Nr. 063 (M-200), 16. März 1983 (1983-03-16) & JP 57 206530 A (AKIHIKO NAKAMURA), 17. Dezember 1982 (1982-12-17)

## Beschreibung

Die vorliegende Erfindung betrifft eine monolithische (aus einem Stück geformte), hohle Nockenwelle für eine Kolbenhubmaschine, insbesondere für eine Brennkraftmaschine gemäß dem Oberbegriff des unabhängigen Patentanspruchs 1 sowie ein Verfahren zur Herstellung einer solchen Nockenwelle gemäß dem Oberbegriff des unabhängigen Patentanspruchs 13. Diese Nockenwelle ist insbesondere für Motoren von Kraftfahrzeugen verwendbar. Eine derartige Nockenwelle und ein derartige Verfahren sind aus der JP 57-206530 A bekannt.

Aus der DE 29 14 095 A ist ein Verfahren zur Herstellung von Nockenwellen aus mehreren einzelnen Teilen bekannt. Diese Teile werden durch Pressen oder Giessen vorgefertigt und anschließend durch Schweißen miteinander verbunden. Halbnocken und/oder Halblager werden durch Tiefziehen in eine Endform gebracht, wobei die Halbnocken und/oder Halblager spiegelsymmetrisch zusammengefügt und zusammengeschweißt werden. Flanschelemente werden durch Schmieden, Giessen oder Drehen aus Vollmaterial hergestellt und anschließend werden die Halbnockenpaare, Halblagerpaare und Flanschelemente unter Zwischenfügung von rohrförmigen Elementen zu einer Nockenwelle zusammengeschweißt. Die Steuerfläche der Nockenwelle kann zumindest abschnittsweise mit einer Außenfläche eines Wellenabschnittes als eine einheitliche Fläche ausgebildet ist.

Die bekannten geschmiedeten bzw. gegossenen Nockenwellen werden zunehmend durch gebaute Nockenwellen abgelöst, insbesondere wenn Rollenschleppsysteme zum Einsatz kommen sollen. Aus dem Stand der Technik sind folgende Hauptvarianten derartiger gebauter Nockenwellen sowie folgende Verfahren zu deren Herstellung bekannt.

Gemäß der DE 412 19 51 C1 werden gehärtete Nocken auf ein Rohr geschoben und nacheinander kraft- und formschlüssig fixiert, wobei anschließend eine Endbearbeitung mittels Schleifen notwendig ist. Diese unter dem Namen ,Krupp-Presta-Welle' bekannte Nockenwelle ist aufgrund der verwendeten massiven Nocken relativ schwer. Außerdem ist wegen des notwendigen Nockenschleifens eine umfangreiche Nachbearbeitung erforderlich. Zudem stellt schon die Fertigung der Nocken selbst einen mehrstufigen Prozess dar.

Eine Gewichtsreduzierung gegenüber der Krupp-Presta-Welle lässt sich gemäß der DE 196 40 872 C2 dadurch erreichen, daß die Nocken der gebauten Nockenwelle als Blechleichtbauteile ausgebildet sind, welche durch ein mehrstufiges Umformverfahren erzeugt werden, und die aus einem Innen- und Außenbord mit einem dazwischen liegenden Steg bestehen. Dabei sitzt der Innenbord jeweils auf der Tragwelle. Die Fertigung der Nockenwelle besteht aus einer umformtechnischen Herstellung der Nocken aus bandförmigem Material, deren Aufpressen auf die Tragwelle und einer Oberflächenhärtung. Es wurde unabhängig davon auch vorgeschlagen, die Nocken aus einem Stapel von etwa 100 passgenau gestanzten Stahlblechlamellen auszubilden, wobei diese Lamellen keine weitere Nachbearbeitung benötigen sollen. Die Fertigung derartiger Nockenwellen kann aber nur in einem mehrstufigen Prozess erfolgen. Inwieweit auf eine Nachbearbeitung verzichtet werden kann, erscheint zudem fraglich (schon aufgrund der Fertigungstoleranzen der Blechlamellen).

Gemäß der Offenbarung der DE 199 09 184 A1 werden separat hergestellte Tragringe, welche eine gewünschte Nockenkontur sowie die erforderlichen Härt- und Verschleißeigenschaften aufweisen, in einem Innenhochdruckumformverfahren (,IHU'-Verfahren) in ein IHU-Werkzeug eingelegt und durch Aufweiten des Rohres kraft- und formschlüssig befestigt. Aus der WO 2004/029421 A1 ist bekannt, derartige Tragringe durch eine Schicht vergleichsweise großer Dicke zu ersetzten und das Rohr vergleichsweise stärker aufzuweiten. Wegen des notwendigen Nockenschleifens ist (wie beim schon vorstehend beschriebenen Stand der Technik) auch bei derartigen Nockenwellen eine umfangreiche Nachbearbeitung erforderlich. Zudem stellt schon die Fertigung der Nocken selbst wiederum einen mehrstufigen Prozess dar. Außerdem ist das aus der WO 2004/029421 A1 bekannte Aufbringen von dicken Schichten mit relativ hohen Kosten verbunden.

Gemäß der Offenbarung der DE 196 22 372 A1 wird eine Nockenwelle mit einem mehrstufigen IHU-Werkzeug aus einer Hohlwelle ausgeformt. Gemäß der Offenbarung der DE 4427 201 A1 wird ein zweistufiges Innenhochdruckumformverfahren angewandt, um die erforderliche Ausformung zu erreichen. Diesen Druckschriften ist jedoch nicht zu entnehmen, wie die derart gebildeten Nocken die erforderliche Härte und Verschleißfestigkeit erhalten sollen.

Aus den Offenbarungen der DE 101 17 526 A1 und DE 199 07 258 C1 sind Verfahren zur Oberflächenbehandlung der Nocken bekannt, wobei (vorzugsweise durch einen Elektronenstrahl im Vakuum) eine Schicht zum Aufschmelzen aufgebracht bzw. die Nockenoberfläche umgeschmolzen wird. Diese bekannten Um- bzw. Aufschmelzen der Nockenoberflächen führen bei Nockenwellen, die mittels IHU-Verfahren geformt sind, zu Verzugserscheinungen der Hohlwelle, was umfangreiche Nachbearbeitung erforderlich macht. Außerdem wird die durch den IHU-Prozess erzeugte vorteilhafte Kaltverfestigung im Gefüge zumindest teilweise wieder aufgehoben.

Nachteilig an den existierenden Nockenwellenkonzepten ist ebenfalls, dass die derzeit realisierbare Gewichtseinsparung von hohlen, gebauten Nockenwellen gegenüber massiv gegossenen Nockenwellen derzeit bei rund 20 bis 40% begrenzt ist.

In Bezug auf diese existierenden Nockenwellenkonzepte ist somit ein zusätzliches Verbesserungspotential hinsichtlich der Fertigungskosten und einer weiteren Gewichtsreduzierung vorhanden, wobei diese weitere Gewichtsreduzierung mit einer Abnahme des Kraftstoffverbrauches der entsprechenden Motoren verbunden ist.

Es ist daher eine Aufgabe der vorliegenden Erfindung, die Fertigungskosten von hohlen Nockenwellen durch Verkürzung der Prozesskette zu vermindern und eine deutliche Gewichtsreduzierung zu erzielen.

Die vorgenannte Aufgabe wird in erfinderischer Weise gelöst durch eine monolithische, hohle Nockenwelle für eine Kolbenhubmaschine, insbesondere für eine Brennkraftmaschine, mit den Merkmalen des unabhängigen Patentanspruchs 1.

Die erfindungsgemäße Nockenwelle ist daher (bis auf die Lager) monolithisch aufgebaut. Separat hergestellte Nocken bzw. Nockenringe oder eine Beschichtung der Nocken sind nicht notwendig. Auf diese Weise wird eine deutliche Gewichtsreduzierung und eine Verkürzung der Prozesskette erreicht. Außerdem sind die Fertigungs- und Materialkosten im Vergleich zum Einsatz von Tragringen vermindert. Danach können die notwendigen Härte- und Verschleißeigenschaften erreicht werden.

Diese einheitliche Fläche aus Steuerfläche des Nockens und Außenfläche des Wellenabschnittes kann im Bereich eines Grundkreises des Nockens ausgebildet sein . Zudem kann ein Grundkreisdurchmesser (Grundkreisradius) des Nockens gleich einem Außendurchmesser (Außenradius) einer Tragwelle der Nockenwelle sein.

Die gemeinsame Steuerfläche kann dadurch gebildet sein, dass jeweils zumindestens zwei paarweise angeordnete Nocken zu einem gemeinsamen Nocken mit einer gemeinsamen Außenkontur zusammengefasst sind. Dabei kann eine Breite der gemeinsamen Steuerfläche eine Summe der Breiten der Steuerflächen der beiden einzelnen paarweise angeordneten Nocken und eines Zwischenraumes zwischen diesen entsprechen. Insbesondere können zumindest zwei, jeweils paarweise angeordnete Nockenpaare vorgesehen sein, wobei die paarweise liegenden Nocken der Nockenpaare jeweils zu einem gemeinsamen Nocken mit einer gemeinsamen Steuerfläche zusammengefasst sein.

Gemäß einem weiteren bevorzugten Ausführungsbeispiels weist zumindest einer der zur Lagerung der Nockenwelle notwendigen Lagersitze eine Lauffläche mit einem Außendurchmesser gleich dem Durchmesser des Grundkreises des zumindest einen Nockens auf.

Gemäß einem weiteren bevorzugten Ausführungsbeispiel ist zumindest einer der zur Lagerung der Nockenwelle notwendigen Lagersitze aus dem gleichen Ausgangsrohr wie der Nocken ausgebildet. Es ist zudem vorteilhaft, wenn zumindest eines der zur Lagerung der Nockenwellen notwendigen Lager form- und kraftflüssig über ein Innenhochdruckumform-Verfahren auf einem zugehörigen Lagersitz der Nockenwelle befestigt ist.

Zudem kann zumindest die Steuerfläche des zumindest einen Nocken oberflächenbehandelt sein, wobei eine Tiefe eines hierdurch gebildeten Verschleißschutzes vorzugsweise zumindest 0,5 mm beträgt.

Die Nockenwelle kann zudem aus einem nitrierfähigen Stahl bestehen.

Die vorliegende Nockenwelle kann in einem Zylinderkopf für eine Kolbenhubmaschine verwendet werden .

In verfahrenstechnischer Hinsicht wird die vorgenannte Aufgabe gelöst durch ein Verfahren zur Herstellung einer solchen Nockenwelle für eine Kolbenhubmaschine mit den Merkmalen des unabhängigen Patentanspruchs 13.

Vorteilhafterweise wird zumindest einer der zur Lagerung der Nockenwelle notwendigen Lagersitze mittels des Innenhochdruckumform-Verfahrens aus dem gleichen Ausgangsrohr wie der Nocken der Nockenwelle ausgebildet .

Gemäß einem bevorzugten Ausführungsbeispiel weist die Nockenwelle zumindest zwei Lagersitze mit verschieden großen Außendurchmessern auf, wobei das für das Innenhochdruckumform-Vertahren verwendete Ausgangsrohr einen Durchmesser des kleineren der Lagersitze einschließlich eines Schleifaufmaßes aufweist und der größere der Lagersitze durch das Innenhochdruckumform-Verfahren geformt wird. Dabei kann das Außenrohr im Bereich außerhalb der Lagersitze anschließend insbesondere durch Rundkneten den Durchmesser des Grundkreises des zumindest einen Nockens erhalten. Zudem kann das für den größeren der Lagersitze vorgesehene Lager der Nockenwelle in ein Innenhochdruckumform-Verfahren-Werkzeug gelegt und durch das Innenhochdruckumform-Verfahren form- und kraftschlüssig auf der Tragwelle befestigt werden.

Gemäß einem weiteren bevorzugten Ausführungsbeispiel weist die Nockenwelle zumindest zwei Lagersitze mit verschieden großen Außendurchmessern auf, wobei das für das Innenhochdruckumform-Verfahren verwendete Ausgangsrohr einen Außendurchmesser des größeren der Lagersitze einschließlich eines Schleifaufmaßes aufweist. Das Ausgangsrohr erhält hierbei vorteilhafterweise im Bereich außerhalb des größeren der Lagersitze hieran anschließend, insbesondere durch Rundnieten, den Durchmesser des Grundkreises des zumindest einen Nockens . Dabei kann zudem der zumindest eine Nocken nach Ausbilden der Lagersitze mittels des Innenhochdruckumform-Verfahrens in dem einstufigen Prozess ausgebildet werden.

Gemäß einem weiteren bevorzugten Ausführungsbeispiel wird eine erforderliche Verschleißfestigkeit des Nockens durch ein verzugsfreies Verfahren zur Materialverfestigung mit einer Tiefe von mindestens 0,5 mm, insbesondere 0,8 mm erreicht. Die erforderliche Verschleißfestigkeit des Nockens kann dabei durch Gas- oder Plasmanitrieren erzielt werden.

Vorteilhafterweise wird zur Herstellung der Nockenwelle ein nitrierfähiger Stahl verwendet.

Die vorliegende Erfindung wird nachfolgend anhand bevorzugter Ausführungsbeispiele in Verbindung mit den zugehörigen Zeichnungen näher erläutert. In diesen zeigen:
- Fig. 1:: eine Teilschnittansicht einer gebauten Nockenwelle gemäß dem Stand der Technik,
- Fig. 2:: eine Ansicht in Richtung einer Längsachse der gebauten Nockenwelle nach Fig. 1 entlang der Linie B-B von Fig. 1,
- Fig. 3:: eine Teilschnittansicht eines ersten Ausführungsbeispieles der vorliegenden Nockenwelle,
- Fig. 4:: eine Teilschnittansicht eines zweiten Ausführungsbeispieles der vorliegenden Nockenwelle, und
- Fig. 5: eine Ansicht in Richtung einer Längsachse der Nockenwelle nach Fig. 4 entlang der Linie C-C.

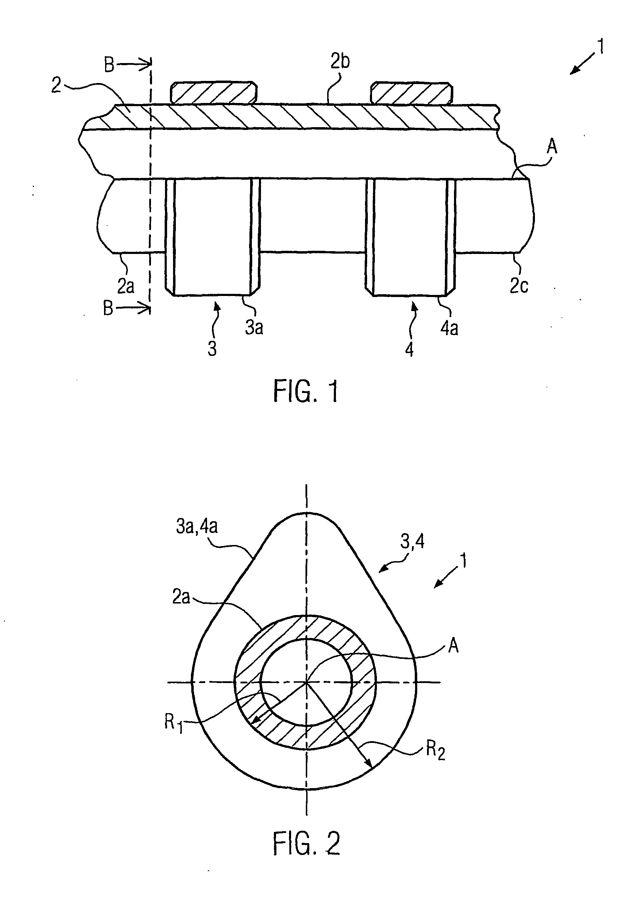

Fig. 1 zeigt eine gebaute, hohle Nockenwelle 1, welche aus einem Ausgangsrohr 2 (das später die Tragwelle bildet) und zwei auf diesem Ausgangsrohr 2 kraft- und/oder formschlüssig angeordneten Nocken 3, 4 besteht. Anhand der Teilschnittdarstellung in Fig. 1 ist ersichtlich, dass die Nocken 3, 4 auf der Oberfläche 2a, 2b, 2c des Ausgangsrohres 2 als separate Bauteile angeordnet sind. Die Nocken 3, 4 sind entlang der Längsachse A des Ausgangsrohres 2 (welche zugleich die Tragwelle der gebildeten Nockenwelle ist) zueinander beabstandet angeordnet. Fig. 1 zeigt die hierdurch entstehende alternierende Abfolge eines Wellenabschnittes 2a, der ersten der Nocken 3, eines weiteren Wellenabschnittes 2b (d.h. eines Zwischenabschnittes zwischen den Nocken), des zweiten der Nocken 4 und einem weiteren Wellenabschnitt 2c ergibt.

Eine rotatorische Bewegung der Nockenwelle 1 wird mittels der exzentrisch angeordneten Nocken auf Ventileinrichtungen übertragen, wobei die Bewegung der Steuerflächen 3a, 4a der Nocken 3, 4 in eine translatorische Bewegung (Hub) der Ventile umgesetzt wird.

Sowohl die Steuerfläche 3a des Nockens 3 als auch die Steuerfläche 4a des Nockens 4 sind als Laufflächen für Rollschleppsysteme ausgebildet. Wie insbesondere auch aus Fig. 2 ersichtlich, bestehen die Steuerflächen 3a, 4a jeweils aus Grundkreis, Rampe, Flanke und Spitze. Ein Radius des Grundkreises der Nocke ist mit dem Bezugszeichen R2 und ein Außenradius des Wellenabschnittes 2a ist mit dem Bezugszeichen R1 in Fig. 2 bezeichnet.

Bei der in den Fig. 1 und 2 dargestellten gebauten Nockenwelle ist der Radius R1 der Außenfläche des Wellenabschnittes 2a (d.h. ein Abstand zwischen der Drehachse A und der äußeren Oberfläche des Wellenabschnittes 2a) kleiner als der Radius R2 des Grundkreises der Nocke 3, 4. Es gilt die Beziehung: R1<R2.

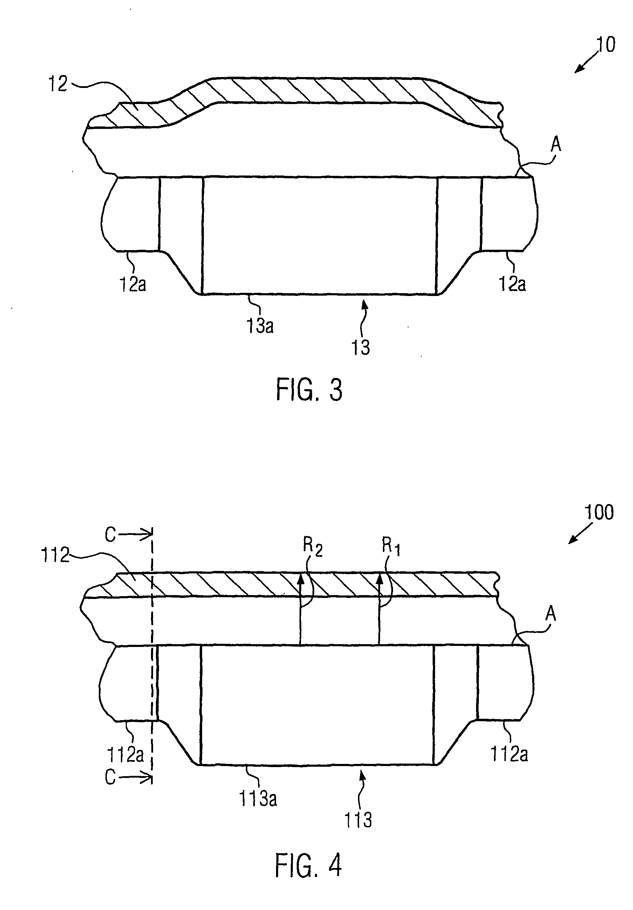

Das in Fig. 3 dargestellte erste Ausführungsbeispiel der vorliegenden Nockenwelle 10 besteht aus dem Wellenabschnitt 12 mit der Wellenoberfläche 12a und einem (gemeinsamen) Nocken 13 mit der Steuerfläche 13a, wobei die Nockenwelle aus einem Ausgangsrohr mittels eines Innenhochdruckumform-Verfahrens in einem einstufigen Verfahren endkontumah, d.h. mit geringem Schleifaufmaß ausgebildet ist. Es werden keine Nocken bzw. Nockenringe in das IHU-Verfahren-Werkzeug eingelegt oder eine Beschichtung der Nocken vorgenommen. Auf diese Weise wird eine deutliche Gewichtsreduzierung und eine Verkürzung der Prozesskette erreicht.

Die vorliegende Nockenwelle 3 kann beispielsweise als Auslassnockenwelle eines Vierzylinder-Vierventil-Motors verwendet werden.

Die vorliegende Nockenwelle 3 gemäß dem ersten Ausführungsbeispiel nach Fig. 3 weist einen (gemeinsame) Nocken in dem Sinne auf, daß die beiden nebeneinander liegenden Nocken der Nockenwelle nach Fig. 1 und 2 zu einer gemeinsamen Außenkontur zusammengefasst sind. Anders ausgedrückt ist der üblicherweise vorhandene Zwischenraum zwischen den beiden genannten Nocken 3, 4 durch eine gemeinsame Kontur des gemeinsamen Nockens 13 ersetzt bzw. die beiden Nocken werden durch einen gemeinsamen Nocken ersetzt, der eine Breite aufweist, die gleich einer Summe der beiden Nocken plus der des Zwischenraumes ist.

Der derart gebildete gemeinsame Nocken 13 weist die gemeinsame Fläche 13a auf, welche eine gemeinsame Steuerfläche für mehrere zu steuernde Einrichtungen (Ventile) bildet. Da die beiden einzelnen Nocken 3, 4 bei der Nockenwelle nach den Fig. 1 und 2 eine identische Außenkontor (d.h. eine identische Steuerfläche 3a, 4a) und eine identische Winkellage aufweisen, ist eine derartige Zusammenfassung zu dem gemeinsamen (breiteren) Nocken 13 möglich.

In Fig. 4 ist ein weiteres Ausführungsbeispiel der vorliegenden Nockenwelle 100 gezeigt. Diese Nockenwelle 100 kann sowohl mit mehreren unabhängigen Nocken gemäß der Nockenwelle nach Fig. 1 und 2 als auch mit einem gemeinsamen Nocken gemäß der Nockenwelle nach Fig. 3 ausgebildet werden.

Das in Fig. 4 gezeigt Ausführungsbeispiel weist im wesentlichen die gleichen Merkmale wie die Nockenwelle 10 gemäß Fig. 3 auf.

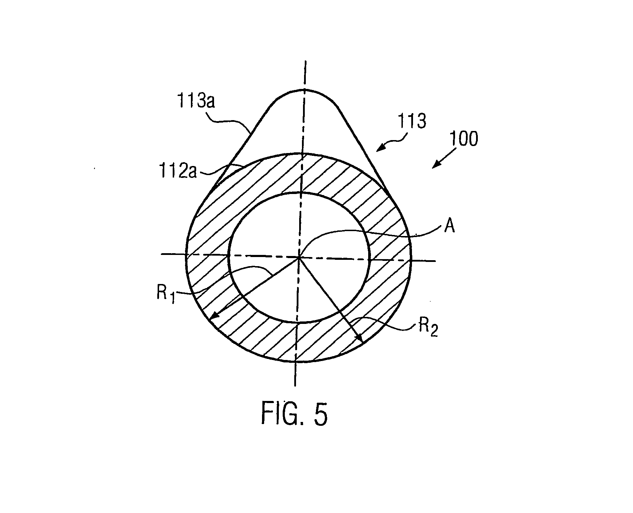

Zusätzlich ist die Nockenkontur mittels des IHU-Verfahren in einem einstufigen Prozess derart ausgebildet, dass ein Rohrdurchmesser der Wellenabschnitte 112a, 112a im Gegensatz zu den bekannten Nockenwellen 1 gleich dem Grundkreisdurchmesser des Nockens ist. Folglich ist ein Außendurchmesser R1 des Wellenabschnittes 112a im wesentlichen gleich zu einem Radius R2 des Grundkreises: R1 = R2. Diese Beziehung ist insbesondere auch aus Fig. 5 ersichtlich, welche die Nockenwelle 100 gemäß Fig. 4 in Blickrichtung der Längsachse / Drehachse zeigt. Dementsprechend bilden die Steuerfläche des Nockens im Bereich des Grundkreises des Nockens und die Außenfläche der Tragwelle zumindest abschnittsweise eine einheitliche (d.h. eine absatzfreie/ stufenfreie) Fläche.

Diese einheitliche Fläche aus Steuerfläche des Nockens und Außenfläche des Wellenabschnittes kann im gesamten Bereich des Grundkreises des Nockens oder nur abschnittsweise ausgebildet sein.

Die vorliegende Nockenwelle 10, 100 kann beispielsweise als Auslaßnockenwelle eines Vierzylinder-Vierventilmotors ausgebildet sein.

Als Ausgangsrohr ist beispielsweise ein 16 MnCr5-Rohr mit einem Durchmesser von 32 mm und einer Wandstärke von 3 mm verwendbar, welches eine genügende Umformbarkeit aufweist. Das Ausformen der Welle kann mit einer IHU-Anlage mit ca. 3200 bar Innendruck im Bauteil durchgeführt werden.

Dabei kann die erforderliche Verschleißfestigkeit des Nockens/ der Nocken durch eine Oberflächenbehandlung erzielt werden. Da der vorliegende IHU-Prozess endkonturnahe Bauteile liefert, kommen für die Oberflächenbehandlung insbesondere Verfahren in Frage, die zu einer relativ geringen thermischen Belastung führen, um ein Verziehen des Bauteils zu verhindern. Insbesondere sind Gas- und Plasmanitrieren als Oberflächenbehandlungsverfahren einsetzbar, wobei insbesondere das Plasmanitrieren eine lokalisierte Behandlung im Nockenbereich ermöglicht.

Da bei Nockenwellen in der Regel hohe Hertz'sche Pressungen auftreten, sollte eine Dicke einer durch die Oberflächenbehandlung (das Nitrieren) erzeugten Verschleißschutzschicht mindestens 0,5 mm dick betragen, um eine genügende Tragfähigkeit zu gewährleisten.

Die vorliegende Nockenwelle 10, 100 ist über zumindest zwei Lagerstellen beispielsweise in einem Zylinderkopf an einer Brennkraftmaschine gelagert.

Die Laufflächen der Lagersitze der hierfür notwendigen Lager werden auf der Nockenwelle 10, 100 ausgebildet. Meist weisen diese Laufflächen unterschiedliche Außendurchmesser auf.

Gemäß einem Ausführungsbeispiel des vorliegenden Herstellungsverfahrens weist dabei das Ausgangsrohr einen Außendurchmesser auf, der einem Außendurchmesser der Lauffläche des kleineren Lagersitzes entspricht. Die Lauffläche des (geringfügig) größeren Lagersitzes wird durch Innenhochdruckumformen ausgeformt. Zudem erhält das Ausgangsrohr außerhalb der Lagersitze hieran anschließend durch Rundkneten den Durchmesser des Grundkreises des Nocken. Die Ausformung der Nocken erfolgt dabei durch Ausbildung einer endkontumahen, monolithischen Nockenkontur aus dem Ausgangsrohr mittels des Innenhochdruckumform-Verfahrens in einem einstufigen Prozess, vorzugsweise mit einer gemeinsamen Steuerfläche zur Steuerung zumindest zweier Ventile. Bei diesem Verfahren ist es zudem möglich, das größere der Lager in das IHU-Werkzeug einzulegen und durch den IHU-Prozess auf der Welle kraft- und/oder formschlüssig zu befestigen.

Gemäß einem weiteren Ausführungsbeispiel des Herstellungsverfahrens weist das Ausgangsrohr einen Außendurchmesser entsprechend einem Außendurchmesser der Lauffläche des größeren Lagersitzes auf. Durch Rundkneten enthält das Ausgangsrohr außerhalb des größeren Lagersitzes anschließend den Durchmesser des Grundkreises des Nocken. Die Ausformung der Nocken selbst erfolgt wie schon dargestellt durch eine endkonturnahe Fertigung einer monolithischen Nockenkontur aus dem Ausgangsrohrmittel des Innenhochdruckumform-Verfahrens in einem einstufigen Prozess, insbesondere mit einer gemeinsamen Steuerflächensteuerung zumindest zweier Ventile.

Die Oberflächenbehandlung bei beiden genannten Ausführungsbeispielen des Herstellungsverfahrens erfolgt wie vorstehend erläutert.

Mit der vorliegenden Nockenwelle bzw. dem vorliegenden Verfahren ist eine Vereinfachung der Prozesskette erreichbar, da das Einlegen der Nocken, Nockenringe oder Lager und die entsprechenden Fügeprozesse entfallen. Vielmehr ist die vorliegenden Nockenwelle aufgrund der gewählten Nockenform in einem einstufigen Prozess mittels IHU herstellbar.

In vorteilhafter Weise ist die vorliegende Nockenwelle (bis auf die notwendigen Lager) monolithisch aufgebaut.

Durch die endkonturnahe Fertigung ist außerdem nur ein geringes Schleifaufmaß erforderlich, was den Bearbeitungsaufwand senkt. Dabei kann das IHU-Werkzeug im Nockenbereich mit einem Aufmaß von 0,2 mm, das das Schleifaufmaß beinhaltet, ausgebildet sein. Da die thermische Oberflächenbehandlung bei einer Temperatur unter 550° erfolgen kann, tritt ein Verziehen der Nockenwelle nicht auf, wodurch ein nachträgliches Richten der Nockenwelle nicht erforderlich ist.

Weiterhin ergeben sich Verminderungen der Fertigungs- und Materialkosten im Vergleich zum Einsatz von Tragringen, z.B. aus 100 Cr6 gemäß der Druckschrift DE 199 09 184 C2.

## Patentansprüche

1. Monolithische, hohle Nockenwelle (10, 100) für eine Kolbenhubmaschine, insbesondere für eine Brennkraftmaschine, mit zumindest einem Nocken (13,113) und zumindest einem Wellenabschnitt (12, 112) benachbart zum Nocken (13, 113), wobei der Nocken (13, 113) eine Steuerfläche (13a, 113a) aufweist, **dadurch gekennzeichnet, dass** die Steuerfläche als gemeinsame Steuerfläche (13a,113a) für zumindest zwei unterschiedliche, über die Nockenwelle zu steuernde Einrichtungen, insbesondere Ventile, und zumindest abschnittsweise mit einer Außenfläche (12a, 112a) des Wellenabschnittes (12, 112) als eine einheitliche Fläche ausgebildet ist.

2. Monolithische, hohle Nockenwelle nach Anspruch 1, **dadurch gekennzeichnet, dass** die einheitliche Fläche aus Steuerfläche (13a, 113a) des Nockens (13, 113) und Außenfläche (12a, 112a) des Wellenabschnittes (12, 112) im Bereich eines Grundkreises (R₂) des Nockens (13, 113) ausgebildet ist.

3. Monolithische, hohle Nockenwelle nach Anspruch 1 oder 2, **dadurch gekennzeichnet, dass** ein Grundkreisradius (R₂) des Nockens (13, 113) gleich einem Außenradius (R₁) einer Tragwelle der Nockenwelle (10, 100) ist.

4. Monolithische, hohle Nockenwelle nach einem der Ansprüche 1 bis 3, **dadurch gekennzeichnet, dass** die gemeinsame Steuerfläche **dadurch** gebildet ist, dass jeweils zumindest zwei paarweise angeordnete Nocken zu einem gemeinsamen Nocken mit einer gemeinsamen Außenkontur zusammengefasst sind.

5. Monolithische, hohle Nockenwelle nach Anspruch 4, **dadurch gekennzeichnet, dass** eine Breite der gemeinsamen Steuerfläche (13a) einer Summe der Breiten der Steuerflächen der beiden einzelnen paarweise angeordneten Nocken und eines Zwischenraumes zwischen diesen entspricht.

6. Monolithische, hohle Nockenwelle nach einem der Ansprüche 1 bis 5, **gekennzeichnet durch** jeweils zumindest zwei paarweise angeordnete Nockenpaare, wobei die paarweise liegende Nocken der Nockenpaare jeweils zu einem gemeinsamen Nocken mit einer gemeinsamen Steuerfläche zusammengefasst sind.

7. Monolithische, hohle Nockenwelle nach einem der Ansprüche 1 bis 6, **dadurch gekennzeichnet, dass** zumindest einer der zur Lagerung der Nockenwelle notwendigen Lagersitze eine Lauffläche mit einen Außendurchmesser gleich dem Durchmesser des Grundkreises des zumindest einen Nockens aufweist.

8. Monolithische, hohle Nockenwelle nach einem der Ansprüche 1 bis 7, **dadurch gekennzeichnet, dass** zumindest einer der zur Lagerung der Nockenwelle notwendigen Lagersitze aus dem gleichen Ausgangsrohr wie der Nocken ausgebildet ist.

9. Monolithische, hohle Nockenwelle nach Anspruch 8, **dadurch gekennzeichnet, dass** zumindest eines der zur Lagerung der Nockenwelle notwendigen Lager über ein Innenhochdruckumform-Verfahren form- und kraftschlüssig auf einem zugehörigen Lagersitz der Nockenwelle befestigt ist.

10. Monolithische, hohle Nockenwelle nach einem der Ansprüche 1 bis 9, **dadurch gekennzeichnet, dass** zumindest die Steuerfläche (13a, 113a) des zumindest einen Nockens (13, 113) oberflächenbehandelt ist, wobei eine Tiefe eines hierdurch gebildeten Verschleißschutzes, vorzugsweise zumindest 0,5 mm ist.

11. Monolithische, hohle Nockenwelle nach einem der Ansprüche 1 bis 10, **dadurch gekennzeichnet, dass** die Nockenwelle aus einem nitrierfähigen Stahl besteht.

12. Zylinderkopf für eine Kolbenhubmaschine, insbesondere Brennkraftmaschine, mit einer Nockenwelle nach einem der Ansprüche 1 bis 11.

13. Verfahren zur Herstellung einer Nockenwelle mit einer Steuerfläche nach einem der Ansprüche 1 bis 11 für eine Kolbenhubmaschine, mit einer endkontumahen Fertigung einer monolithischen Nockenkontur aus einem Ausgangsrohr mittels eines Innenhochdruckumform-Verfahrens in einem einstufigen Prozess, **dadurch gekennzeichnet, dass** eine gemeinsame Steuerfläche zur Steuerung zumindest zweier Einrichtungen, insbesondere Ventile und die gemeinsame Steuerfläche im Bereich eines Grundkreises des Nockens zumindest abschnittsweise als einheitliche Fläche des Wellenabschnittes ausgebildet wird.

14. Verfahren zur Herstellung einer Nockenwelle für eine Kolbenhubmaschine nach Anspruch 13, **dadurch gekennzeichnet, dass** zumindest eines der zur Lagerung der Nockenwelle notwendigen Lagersitze mittels des Innenhochdruck-umform-Verfahrens aus dem gleichen Ausgangsrohr wie der Nocken der Nockenwelle ausgebildet wird.

15. Verfahren zur Herstellung einer Nockenwelle für eine Kolbenhubmaschine nach Anspruch 13 oder 14, **dadurch gekennzeichnet, dass** die Nockenwelle zumindest zwei Lagersitze mit Laufflächen mit verschieden großen Außendurchmessem aufweist, wobei das für das Innenhochdruckumform-Verfahren verwendete Ausgangsrohr einen Durchmesser der Lauffläche des kleineren der Lagersitze einschließlich eines Schleifaufmaßes aufweist und der größere der Lagersitze durch das Innenhochdruckumform-Verfahren geformt wird.

16. Verfahren zur Herstellung einer Nockenwelle für eine Kolbenhubmaschine nach einem der Ansprüche 15, **dadurch gekennzeichnet, dass** das Ausgangsrohr im Bereich außerhalb der Lagersitze anschließend insbesondere durch Rundkneten den Durchmesser des Grundkreises des zumindest einen Nockens erhält.

17. Verfahren zur Herstellung einer Nockenwelle für eine Kolbenhubmaschine nach Anspruch 15 oder 16, **dadurch gekennzeichnet, dass** das für den größeren der Lagersitze vorgesehene Lager der Nockenwelle in ein Innenhochdruckumform-Verfahren-Werkzeug gelegt und durch das Innenhochdruckumform-Verfahren form- und kraftschlüssig auf der Welle befestigt werden.

18. Verfahren zur Herstellung einer Nockenwelle für eine Kolbenhubmaschine nach einem der Ansprüche 13 bis 17, **dadurch gekennzeichnet, dass** die Nockenwelle zumindest zwei Lagersitze mit Laufflächen mit verschieden großen Außendurchmessern aufweist, wobei das für das Innenhochdruckumform-Verfahren verwendete Ausgangsrohr einen Außendurchmesser der Lagerfläche des größeren der Lagersitze einschließlich eines Schleifaufmaßes aufweist.

19. Verfahren zur Herstellung einer Nockenwelle für eine Kolbenhubmaschine nach Anspruch 18, **dadurch gekennzeichnet, dass** das Ausgangsrohr im Bereich außerhalb des größeren der Lagersitze hieran anschließend, insbesondere durch Rundkneten, den Durchmesser des Grundkreises des zumindest einen Nockens erhält.

20. Verfahren zur Herstellung einer Nockenwelle für eine Kolbenhubmaschine nach Anspruch 18 oder 19, **dadurch gekennzeichnet, dass** der zumindest eine Nocken nach Ausbilden der Lagersitze mittels des Innenhochdruckumform-Verfahrens in dem einstufigen Prozess ausgebildet wird.

21. Verfahren zur Herstellung einer Nockenwelle für eine Kolbenhubmaschine nach einem der Ansprüche 13 bis 20, **dadurch gekennzeichnet, dass** eine erforderliche Verschleißfestigkeit des Nockens durch ein verzugsfreies Verfahren zur Materialverfestigung mit einer Tiefe von mindestens 0,5 mm, insbesondere 0,8 mm, erreicht wird.

22. Verfahren zur Herstellung einer Nockenwelle für eine Kolbenhubmaschine nach Anspruch 21, **dadurch gekennzeichnet, dass** die erforderliche Verschleißfestigkeit des Nockens durch Gas- oder Plasmanitrieren erzielt wird.

23. Verfahren zur Herstellung einer Nockenwelle für eine Kolbenhubmaschine, nach einem der Ansprüche 13 bis 22, **dadurch gekennzeichnet, dass** ein nitrierfähiger Stahl verwendet wird.

## Claims

1. Monolithic, hollow camshaft (10, 100) for a reciprocating engine, in particular for an internal combustion engine, with at least one cam (13, 113) and at least one shaft portion (12, 112) adjacent to the cam (13, 113), which cam (13, 113) has a control surface (13a, 113a), **characterised in that** the control surface is provided in the form of a common control surface (13a, 113a) for at least two different devices to be controlled by means of the camshaft, in particular valves, and constituting an integral surface with an external surface (12a, 112a) of the shaft portion (12, 112) in at least certain regions.

2. Monolithic, hollow camshaft as claimed in claim 1, **characterised in that** the integral surface comprises the control surface (13a, 113a) of the cam (13, 113) and external surface (12a, 112a) of the shaft portion (12, 112) in the region of a base circle (R₂) of the cam (13, 113).

3. Monolithic, hollow camshaft as claimed in claim 1 or 2, **characterised in that** a base circle radius (R₂) of the cam (13, 113) is identical to an external radius (R₁) of a bearing shaft of the camshaft (10, 100).

4. Monolithic, hollow camshaft as claimed in one of claims 1 to 3, **characterised in that** the common control surface is obtained by assembling cams arranged respectively in at least two pairs to form a common cam with a common external contour.

5. Monolithic, hollow camshaft as claimed in claim 4, **characterised in that** a width of the common control surface (13a) corresponds to a sum of the widths of the control surfaces of the two individual cams arranged in pairs and a gap between them.

6. Monolithic, hollow camshaft as claimed in one of claims 1 to 5, **characterised by** at least two cam pairs arranged in pairs, and the cams of the cam pairs lying in pairs are respectively assembled to form a common cam with a common control surface.

7. Monolithic, hollow camshaft as claimed in one of claims 1 to 6, **characterised in that** at least one of the bearing seats needed to mount the camshaft has a running surface with an external diameter identical to the diameter of the base circle of the at least one cam.

8. Monolithic, hollow camshaft as claimed in one of claims 1 to 7, **characterised in that** at least one of the bearing seats needed to mount the camshaft is made from the same initial tube as the cam.

9. Monolithic, hollow camshaft as claimed in claim 8, **characterised in that** at least one of the bearings needed to mount the camshaft is positively and non-positively secured to a co-operating bearing seat of the camshaft by means of an internal high-pressure moulding method.

10. Monolithic, hollow camshaft as claimed in one of claims 1 to 9, **characterised in that** at least the control surface (13a, 113a) of the at least one cam (13, 113) is surface-treated, and a depth of an anti-wear protection produced as a result is preferably at least 0.5 mm.

11. Monolithic, hollow camshaft as claimed in one of claims 1 to 10, **characterised in that** the camshaft is made from a steel which lends itself to nitrification.

12. Cylinder head for a reciprocating engine, in particular an internal combustion engine, with a camshaft as claimed in one of claims 1 to 11.

13. Method of producing a camshaft with a control surface as claimed in one of claims 1 to 11 for a reciprocating engine, whereby a monolithic cam contour close to the final contour is produced from an initial tube by means of an internal high-pressure moulding method in a single-stage process, **characterised in that** a common control surface for controlling at least two devices, in particular valves, and the common control surface in the region of a base circle of the cam are formed as an integral surface of the shaft portion in at least certain regions.

14. Method of producing a camshaft for a reciprocating engine as claimed in claim 13, **characterised in that** at least one of the bearing seats needed to mount the camshaft is made by means of the internal high-pressure moulding method from the same initial tube as the cam of the camshaft.

15. Method of producing a camshaft for a reciprocating engine as claimed in claim 13 or 14, **characterised in that** the camshaft has at least two bearing seats with running surfaces of differently sized external diameters, and the initial tube used for the internal high-pressure moulding method has a diameter corresponding to the running surface of the smaller of the bearing seats, including an amount for grinding, and the larger of the bearing seats is moulded by the internal high-pressure moulding method.

16. Method of producing a camshaft for a reciprocating engine as claimed in claim 15, **characterised in that** the diameter of the base circle of the at least one cam is then imparted to the initial tube in the region outside the bearing seats, in particular by means of circular kneading.

17. Method of producing a camshaft for a reciprocating engine as claimed in claim 15 or 16, **characterised in that** the bearing of the camshaft provided for the larger of the bearing seats is placed in a mould for the internal high-pressure moulding method and is positively and non-positively fitted on the shaft by the internal high-pressure moulding method.

18. Method of producing a camshaft for a reciprocating engine as claimed in one of claims 13 to 17, **characterised in that** the camshaft has at least two bearing seats with running surfaces with differently sized external diameters, and the initial tube used for the internal high-pressure moulding method has an external diameter corresponding to the bearing surface of the larger of the bearing seats, including an amount for grinding.

19. Method of producing a camshaft for a reciprocating engine as claimed in claim 18, **characterised in that** the diameter of the base circle of the at least one cam is then imparted to the initial tube in the region outside of the larger of the bearing seats, in particular by circular kneading.

20. Method of producing a camshaft for a reciprocating engine as claimed in claim 18 or 19, **characterised in that**, after making the bearing seats, the at least one cam is made by means of the internal high-pressure moulding method in a single-stage process.

21. Method of producing a camshaft for a reciprocating engine as claimed in one of claims 13 to 20, **characterised in that** a required wear resistance of the cam is obtained by means of a delay-free process of hardening the material with a depth of at least 0.5 mm, in particular 0.8 mm.

22. Method of producing a camshaft for a reciprocating engine as claimed in claim 21, **characterised in that** the required wear resistance of the cam is obtained by gas or plasma nitrification.

23. Method of producing a camshaft for a reciprocating engine as claimed in one of claims 13 to 22, **characterised in that** a steel which lends itself to nitrification is used.

## Revendications

1. Arbre à cames creux monolithique (10, 100) pour une machine à piston alternatif, en particulier pour un moteur à combustion interne, avec au moins une came (13, 113) et au moins une section d'arbre (12, 112) contigüe à la came (13, 113), la came (13, 113) présentant une surface de commande (13a, 113a) , **caractérisé en ce que** la surface de commande est réalisée comme une surface de commande commune (13a, 113a) pour au moins deux dispositifs différents, devant être commandés par le biais de l'arbre à cames, en particulier des soupapes, et au moins par endroits avec une surface extérieure (12a, 112a) de la section d'arbre (12, 112) comme une surface uniforme.

2. Arbre à cames creux monolithique selon la revendication 1, **caractérisé en ce que** la surface uniforme composée de la surface de commande (13a, 113a) de la came (13, 113) et de la surface extérieure (12a, 112a) de la section d'arbre (12, 112) est réalisée dans la zone d'un cercle de base (R₂) de la came (13, 113).

3. Arbre à cames creux monolithique selon la revendication 1 ou 2, **caractérisé en ce qu'**un rayon de cercle de base (R₂) de la came (13, 113) est identique à un rayon extérieur (R₁) d'un arbre porteur de l'arbre à cames (10, 100).

4. Arbre à cames creux monolithique selon l'une quelconque des revendications 1 à 3, **caractérisé en ce que** la surface de commande commune est formée en réunissant respectivement au moins deux cames disposées par paires pour former une came commune avec un contour extérieur commun.

5. Arbre à cames creux monolithique selon la revendication 4, **caractérisé en ce qu'**une largeur de la surface de commande commune (13a) correspond à une somme des largeurs des surfaces de commande des deux cames individuelles disposées par paires et d'un espace intermédiaire entre celles-ci.

6. Arbre à cames creux monolithique selon l'une quelconque des revendications 1 à 5, **caractérisé par** respectivement au moins deux paires de cames disposées par paires, les cames se trouvant par paires des paires de cames étant réunies respectivement pour former une came commune avec une surface de commande commune.

7. Arbre à cames creux monolithique selon l'une quelconque des revendications 1 à 6, **caractérisé en ce qu'**au moins l'un des sièges de palier nécessaires au logement de l'arbre à cames présente une surface de roulement avec un diamètre extérieur identique au diamètre du cercle de base de l'au moins une came.

8. Arbre à cames creux monolithique selon l'une quelconque des revendications 1 à 7, **caractérisé en ce qu'**au moins l'un des sièges de palier nécessaires au
logement de l'arbre à cames est réalisée dans le même tube de sortie que la came.

9. Arbre à cames creux monolithique selon la revendication 8, **caractérisé en ce qu'**au moins l'un des paliers nécessaires au logement de l'arbre à cames est fixé par un procédé de formage sous haute pression interne par complémentarité de forme et à force sur un siège de palier afférente de l'arbre à cames.

10. Arbre à cames creux monolithique selon l'une quelconque des revendications 1 à 9, **caractérisé en ce qu'**au moins la surface de commande (13a, 113a) de l'au moins une came (13, 113) est traitée en surface, une profondeur d'une protection contre l'usure formée par là-même s'élevant de préférence au moins à 0,5 mm.

11. Arbre à cames creux monolithique selon l'une quelconque des revendications 1 à 10, **caractérisé en ce que** l'arbre à cames se compose d'un acier pouvant être nitruré.

12. Tête de cylindre d'une machine à piston alternatif, en particulier moteur à combustion interne, avec un arbre à cames selon l'une quelconque des revendications 1 à 11.

13. Procédé de fabrication d'un arbre à cames avec une surface de commande selon l'une quelconque des revendications 1 à 11 pour une machine à piston alternatif, avec une fabrication proche du contour
final d'un contour de came monolithique dans un tube de sortie à l'aide d'un procédé de formage sous haute pression interne dans un processus à une étape, **caractérisé en ce qu'**une surface de commande commune pour la commande d'au moins deux dispositifs, en particulier des soupapes et la surface de commande commune sont réalisées dans la zone d'un cercle de base de la came au moins par endroits comme une surface uniforme de la section d'arbre.

14. Procédé de fabrication d'un arbre à cames pour une machine à piston alternatif selon la revendication 13, **caractérisé en ce qu'**au moins l'un des sièges de palier nécessaires au logement de l'arbre à cames est réalisé par le procédé de formage sous haute pression interne dans le même tube de sortie que la came de l'arbre à cames.

15. Procédé de fabrication d'un arbre à cames pour une machine à piston alternatif selon la revendication 13 ou 14, **caractérisé en ce que** l'arbre à cames présente au moins deux sièges de palier dotés de surfaces de roulement avec des diamètres extérieurs de différente taille, le tube de sortie utilisé pour le procédé de formage sous haute pression interne présentant un diamètre de surface de roulement du plus petit des sièges de palier, surépaisseur de rectification y comprise et le plus grand des sièges de palier étant formé par le procédé de formage sous haute pression interne.

16. Procédé de fabrication d'un arbre à cames pour une machine à piston alternatif selon la revendication 15, **caractérisé en ce que** le tube de sortie conserve dans la zone en dehors des sièges de palier après celles-ci, en particulier par pétrissage en rond, le diamètre du cercle de base de l'au moins une came.

17. Procédé de fabrication d'un arbre à cames pour une machine à piston alternatif selon la revendication 15 ou 16, **caractérisé en ce que** le palier prévu pour le plus grand des sièges de palier de l'arbre à cames est posé dans un outil du procédé de formage sous haute pression interne et est fixé par le procédé de formage sous haute pression interne par complémentarité de forme et à force sur l'arbre.

18. Procédé de fabrication d'un arbre à cames pour une machine à piston alternatif selon l'une quelconque des revendications 13 à 17, **caractérisé en ce que** l'arbre à cames présente au moins deux sièges de palier dotés de surfaces de roulement avec des diamètres extérieurs de taille différente, le tube de sortie utilisé pour le procédé de formage sous haute pression interne présentant un diamètre extérieur de surface de palier du plus grand des sièges de palier, surépaisseur de rectification y comprise.

19. Procédé de fabrication d'un arbre à cames pour une machine à piston alternatif selon la revendication 18, **caractérisé en ce que** le tube de sortie conserve dans la zone en dehors du plus grand des sièges de
palier après ceux-ci, en particulier par pétrissage en rond, le diamètre du cercle de base de l'au moins une came.

20. Procédé de fabrication d'un arbre à cames pour une machine à piston alternatif selon la revendication 18 ou 19, **caractérisé en ce que** l'au moins une came est réalisée après la réalisation des sièges de palier par le procédé de formage sous haute pression interne dans le processus à une étape.

21. Procédé de fabrication d'un arbre à cames pour une machine à piston alternatif selon l'une quelconque des revendications 13 à 20, **caractérisé en ce qu'**une résistance à l'usure nécessaire de la came est atteinte par un procédé indéformable pour le durcissement du matériau avec une profondeur d'au moins 0,5 mm, en particulier 0,8 mm.

22. Procédé de fabrication d'un arbre à cames pour une machine à piston alternatif selon la revendication 21, **caractérisé en ce que** la résistance à l'usure nécessaire de la came est obtenue par nitruration en phase gazeuse ou au plasma.

23. Procédé de fabrication d'un arbre à cames pour une machine à piston alternatif selon l'une quelconque des revendications 13 à 22, **caractérisé en ce qu'**un acier pouvant être nitruré est utilisé.
